# EUROPÄISCHE PATENTSCHRIFT

(11) **EP 1 550 269 B1**
(45) Veröffentlichungstag und Bekanntmachung des Hinweises auf die Patenterteilung: **19.12.2007**
(21) Anmeldenummer: 03798868.0
(22) Anmeldetag: 23.09.2003
(51) Int. Cl.: H04L 12/437, H04L 12/423

(54) **KOMMUNIKATIONSSYSTEM**
COMMUNICATION SYSTEM
SYSTEME DE COMMUNICATION

(30) Priorität: 02.10.2002 DE 10246007
(43) Veröffentlichungstag der Anmeldung: 06.07.2005
(73) Patentinhaber: Bosch Rexroth AG, 70184 Stuttgart (DE); Koenig & Bauer Aktiengesellschaft, 97080 Würzburg (DE)
(72) Erfinder: MARKERT, Nikolaus, 97855 Triefenstein (DE); SCHULTZE, Stephan, 97816 Lohr am Main (DE)
(86) Internationale Anmeldenummer: PCT/DE2003/003162
(87) Internationale Veröffentlichungsnummer: WO 2004/032419

(56) Entgegenhaltungen:
- EP-A- 0 871 344
- DE-A- 19 633 744

## Beschreibung

Die Erfindung betrifft ein Kommunikationssystem mit Netzwerkknoten gemäß dem Oberbegriff des Patentanspruchs 1 und ein Verfahren zum Steuern eines Kommunikationssystems gemäß dem Oberbegriff des Patentanspruchs 10.

Kommunikationssysteme mit Netzwerkknoten eines Steuerungs- und/oder Antriebsnetzwerkes werden in den verschiedensten technischen Bereichen zum Betrieb industrieller Maschinen eingesetzt. Ein Kommunikationssystem mit Netzwerkknoten verbindet in einer ersten Ausführungsform über einen geschlossenen Signalpfad mehrere Netzwerkknoten zu einem Netzwerk. Daten und Steuersignale werden dabei über den ringförmigen Signalpfad durch alle Netzwerkknoten geführt. Ein Netzwerkknoten ist beispielsweise als Steuereinheit ausgebildet. In einer Master/Slave-Konfiguration ist eine Steuereinheit vorgesehen, die eine Master-Funktion ausführt, und die weitere Steuereinheiten, die Slave-Funktionen ausführen, steuert. Dabei wird beispielsweise von der Master-Steuereinheit ein Steuersignal über einen Ausgang in den Signalpfad abgegeben und über einen Eingang von dem geschlossenen Signalpfad wieder erhalten.

Zur Sicherung einer zuverlässigen Signalinformation ist es beispielsweise bekannt, neben einem Primärring als Signalpfad einen weiteren Signalpfad als Sekundärring anzuordnen. Der Sekundärring ist parallel zum Primärring ausgebildet und stellt eine redundante Datenleitung dar. Fällt einer der beiden Signalpfade aus, so übernimmt der andere intakte Signalpfad den Austausch der Daten zwischen den Steuereinheiten.

Weiterhin ist es bekannt, bei Ausfall einer Datenverbindung des Primärringes oder des Sekundärringes über die verbleibenden intakten Verbindungen des Primärringes und des Sekundärringes einen einzigen geschlossenen Signalpfad aufzubauen. Dazu weisen die Netzwerkknoten Umschalteinheiten auf, die eine entsprechende interne Umschaltung durchführen. Dabei wird der Primärring eines Netzwerkknotens mit dem Sekundärring des Netzwerkknotens verbunden. Ein gattungsbildendes Kommunikationssystem ist aus der Dokumentation "Electronic Drives and Controls", Steuerungssystem-Synax, 04VRS, Funktionsbeschreibung, der Firma Bosch-Rexroth im Kapitel 11.09 unter dem Abschnitt "Fehler im Primärring" beschrieben.

Aus der Patentschrift DE 19 708 985 C1 ist ein Verfahren und eine Vorrichtung zur Aufrechterhaltung eines winkelgenauen Gleichlaufs einzelner vernetzter Antriebe eines dezentralen Antriebssystems bekannt. In der beschriebenen Vorrichtung sind die dezentralen Antriebe in Form eines Kommunikationssystems miteinander verbunden. Dabei werden Steuerdaten von einem Leitsystem über eine Ringleitung den einzelnen Antrieben zur Verfügung gestellt. Bei einem Ausfall des verwendeten Bussystems wird zum winkelgenauen Gleichlauf jedes Antriebs zu einem benachbarten Antrieb des dezentralen Antriebssystems jeweils als Lage-Sollwert anstelle eines vorbestimmten Leit-Sollwertes ein Maschinen-Lage-Ist-Wert eines technologisch vorgelagerten Antriebs und jeweils als Lage-Ist-Wert anstelle des Maschinen-Lage-Ist-Wertes ein Motor-Lage-Ist-Wert verwendet. Somit kann jeder Antrieb beim Ausfall des Bussystems einen winkelgenauen Gleichlauf zum benachbarten Antrieb aufrechterhalten, wodurch das Antriebssystem zerstörungsfrei stillgesetzt werden kann.

Die EP 0 871 344 A2 zeigt ein Kommunikationssystem mit Netzwerkknoten mit einer geschlossenen ringförmigen Netzwerkstruktur. Das Netzwerk ist ein lokales, nach dem asynchronen Transfermodus (ATM) arbeitendes Netzwerk zur Übertragung von Zellen. Es wird offenbart, wie bei einem derart ausgestalteten Netzwerk eine Unterteilung im Fehlerfall stattfinden kann, um den Betrieb des Netzwerks aufrecht zu erhalten.

Die DE 196 33 744 A1 zeigt ein Kommunikationssystem, bei dem Netzwerkknoten über eine Doppelringstruktur verbunden sind. Das Kommunikationssystem ist zum Betrieb industrieller Maschinen wie auch Druckmaschinen geeignet. Ein Netzwerkknoten weist zwei Eingänge und zwei Ausgänge auf. Im Normalbetrieb wird nur einer von zwei redundanten Empfängerströme weiterverarbeitet, wohingegen im Fehlerfall auf den anderen, bisher nicht verwendeten Empfängerstrom zurückgegriffen wird.

Die Aufgabe der Erfindung besteht darin, ein Kommunikationssystem mit Netzwerkknoten eines Steuerungs- und/oder Antriebsnetzwerkes bereitzustellen, das eine erhöhte Flexibilität im Aufbau ermöglicht.

Die Aufgabe der Erfindung wird durch das Kommunikationssystem mit den Merkmalen des Anspruchs 1 und das Verfahren zum Steuern eines Kommunikationssystems gemäß den Merkmalen des Anspruchs 10 gelöst.

Ein Vorteil der Erfindung besteht darin, dass das Kommunikationssystem mehrere Netzwerke aufweist, die flexibel konfigurierbar sind. Auf diese Weise kann eine Anpassung der Netzwerkstruktur an Fehlfunktionen der Netzwerkknoten oder der mit den Netzwerkknoten verbundenen Steuereinheiten durchgeführt werden. Zudem kann die Konfiguration auch an verschiedene Maschinenumgebungen angepasst werden. Je nach Anwendungsfall kann es vorteilhaft sein, einen Netzwerkknoten in ein erstes oder ein zweites Netzwerk einzubinden. Beispielsweise können auch Steuereinheiten, die relativ häufig ausfallen, in kleine Netzwerke zusammengefasst werden oder in Netzwerke eingebunden werden, bei deren Ausfall entweder eine Fehlfunktion schnell erkannt wird oder bei deren Ausfall eine geringe Beeinträchtigung des gesamten Kommunikationssystems erhalten wird. Somit bietet das Kommunikationssystem gemäß des Anspruchs 1 eine erhöhte Flexibilität in der Aufteilung der einzelnen Netzwerke, die zudem voneinander unabhängige Signalpfade aufweisen. Durch die Unabhängigkeit der Signalpfade wird bei Ausfall eines Netzwerkes in vorteilhafter Weise die Funktionsfähigkeit der anderen Netzwerke nicht beeinträchtigt.

In einer einfachen Ausführungsform des Kommunikationssystems sind zwei Netzwerke jeweils über einen bidirektionalen Signalpfad miteinander verbindbar, wobei der bidirektionale Signalpfad zwischen zwei Netzwerkknoten der verschiedenen Netzwerke ausbildbar ist. Auf diese Weise kann eine einfache und kostengünstige Verbindung der zwei Netzwerke hergestellt werden. Je nach Ausführungsform wird der bidirektionale Signalpfad beispielsweise durch zwei elektrische Leitungen dargestellt.

Es ist jedoch auch möglich, dass der bidirektionale Signalpfad in Form von zwei Datenkanälen eines Zeit-Multiplexsystems dargestellt wird.

In einer vorteilhaften Ausführungsform ist jeder Netzwerkknoten mit einer Steuereinheit verbunden. In einer einfachen Ausführungsform wird die Funktion des Netzwerkknotens durch die Steuereinheit selbst dargestellt.

Je nach Anwendungsform weist ein Netzwerk eine Steuereinheit mit einer Master-Funktion und wenigstens eine weitere Steuereinheit mit einer Slave-Funktion auf. Durch die Verwendung der Master-Funktion werden beispielsweise verbindliche Zeitraster oder verbindliche Steuerbefehle von der Master-Steuereinheit vorgegeben, die von den Slave-Steuereinheiten verwendet bzw. berücksichtigt werden. Somit ist auf einfache Weise eine innerhalb des Netzwerkes gültige Zeitachse oder Signalfolge vorgebbar.

In einer bevorzugten Ausführungsform ist die Umschalteinheit des Netzwerkknotens über eine Softwaresteuerung umschaltbar. Die Ausbildung der Umschalteinheit in Form einer Softwaresteuerung bildet den Vorteil, dass die Schaltposition der Umschalteinheit auf einfache Weise und flexibel veränderbar ist. Auf diese Weise kann die Konfiguration der Netzwerke ohne hardwaremäßige Umbauarbeiten am Kommunikationssystem durchgeführt werden.

Ein bevorzugter Anwendungsbereich des erfindungsgemäßen Kommunikationssystems liegt in einem Netzwerk mit Steuereinheiten, die nach einer Leitachse und davon abhängenden Folgeachsen eine zeitgenaue Steuerung ausführen.

Vorzugsweise wird das erfindungsgemäße Kommunikationssystem bei Druckmaschinen, insbesondere bei Druckmaschinen mit mehreren Druckwerken eingesetzt. Dabei können je nach Ausführungsform die Steuereinheiten eines Druckwerkes in einem Netzwerk oder die Steuereinheiten aller Druckwerke einer Druckmaschine in einem Netzwerk eingebunden sein.

Das erfindungsgemäße Kommunikationssystem bietet weiterhin den Vorteil, dass die Funktion der Steuereinheiten der Netzwerke in Abhängigkeit von der Aufteilung der Steuereinheiten zu den einzelnen Netzwerken veränderbar ist. Beispielsweise kann eine Steuereinheit in einer ersten Konfiguration der Netzwerke eine Master-Funktion und in einer zweiten Konfiguration der Netzwerke eine Slave-Funktion ausführen. In entsprechender Weise kann auch die Slave-Funktion einer Steuereinheit in eine Master-Funktion geändert werden. Vorzugsweise weist jedes Netzwerk eine Steuereinheit mit einer Master-Funktion auf.

Die Erfindung wird im Folgenden anhand der Figuren näher erläutert. Es zeigen
Fig. 1 ein Kommunikationssystem mit zwei. Netzwerken,
Fig. 2 ein Kommunikationssystem mit einer veränderten Konfiguration der zwei Netzwerke,
Fig. 3 ein Kommunikationssystem für die Steuerung eines Maschinensystems,
Fig. 4 ein Kommunikationssystem für eine Druckmaschine und
Fig. 5 einen Teil eines Kommunikationssystems für eine Rotationsdruckmaschine.

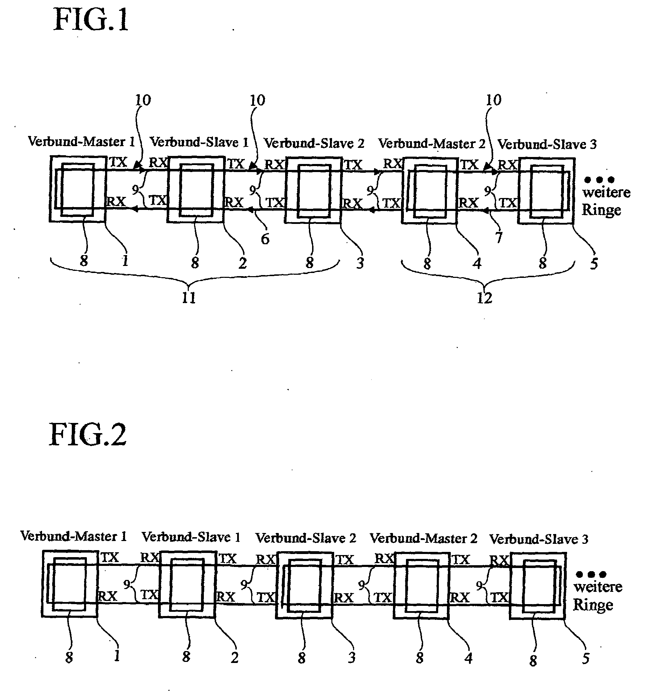

Fig. 1 zeigt ein Kommunikationssystem mit Netzwerkknoten 1, 2, 3, 4, 5. Das Kommunikationssystem ist in zwei Netzwerke 11, 12 unterteilt. Das erste Netzwerk 11 umfasst den ersten, den zweiten und den dritten Netzwerkknoten 1, 2, 3. Das zweite Netzwerk 12 umfasst den vierten und fünften Netzwerkknoten 4, 5. Jeder Netzwerkknoten weist eine Umschalteinheit 8 auf.

Die Netzwerkknoten 1, 2, 3, 4, 5 sind über zwei Leitungen 9 miteinander verbunden. Für jede Signalübertragungsrichtung ist eine Leitung 9 zwischen zwei Netzwerkknoten 1 bis 5 ausgebildet. Die Leitungen 9 des ersten, zweiten und dritten Netzwerkknotens 1, 2, 3 bilden eine erste Ringleitung 6. Die' zwei Leitungen 9, die einen Signalaustausch zwischen zwei Netzwerkknoten 1, 2 in zwei Richtungen ermöglichen, stellen einen bidirektionalen Signalpfad 10 dar. Der bidirektionale Signalpfad 10 weist zwei Signalwege auf, die in entgegengesetzten Richtungen Signale übertragen. Für jeden Signalweg ist eine Leitung 9 vorgesehen.

In der dargestellten Ausführungsform wird die Funktionalität des ersten, zweiten und dritten Netzwerkknotens 1, 2, 3 durch eine entsprechende erste, zweite und dritte Steuereinheit dargestellt. Die Funktion eines Netzwerkknotens besteht darin, Signale über die Leitungen weiterzuleiten und Signale, die für die Steuereinheit bestimmt sind, die an den Netzwerkknoten angeschlossen ist, auszukoppeln und an die Steuereinheit weiterzuleiten. In entsprechender Weise werden auch Signale der Steuereinheit über den Netzwerkknoten in den Signalpfad eingekoppelt. Zur Datenübertragung wird ein Feldbussystem verwendet. Eine Zuordnung von Daten zu Steuereinheiten erfolgt durch die Vergabe von Adressen. Jedem Nutzsignal wird eine Adresse zugefügt. Damit ist festgelegt, für welche Steuereinheit das Nutzsignal bestimmt ist.

In dem beschriebenen Ausführungsbeispiel weist die erste Steuereinheit des ersten Netzwerkknotens 1 eine Master-Funktionalität auf, die Steuersignale und/oder Zeitrastersignale für den zweiten und dritten Netzwerkknoten und deren zweite und dritte Steuereinheiten vorgibt. Die zweite und dritte Steuereinheit, die die Funktionalitäten des zweiten und dritten Netzwerkknotens 2, 3 realisieren, weisen Slave-Funktionen auf. Die erste Steuereinheit stellt die Master-Steuereinheit und die zweite und die dritte Steuereinheit stellen eine Slave-Steuereinheit innerhalb des ersten Netzwerkes 11 dar.

Die Master-Steuereinheit gibt verbindlich Steuerbefehle und ein Zeitraster für die Slave-Steuereinheiten vor.

Das zweite Netzwerk 12 weist den vierten und den fünften Netzwerkknoten 4, 5 auf. Der vierte und der fünfte Netzwerkknoten sind über zwei Leitungen 9 miteinander verbunden. Die zwei Leitungen 9 stellen einen bidirektionalen Signalpfad 10 dar. Der bidirektionale Signalpfad 10 weist für jede Übertragungsrichtung einen Signalweg auf. Für jeden Signalweg wird eine Leitung 9 verwendet.

Die Leitungen 9 des ersten und des zweiten Netzwerkes 11, 12 stehen jeweils mit Umschalteinheiten 8 der Netzwerkknoten 1, 2, 3, 4, 5 in Verbindung. Eine Umschalteinheit 8 eines Netzwerkknotens 1, 2, 3, 4, 5 weist die Funktionalität auf, dass in Abhängigkeit von der Schaltposition der Umschalteinheit 8 die Umschalteinheit 8 die Leitungen 9 eines Netzwerkknotens 1 bis 5 miteinander verbindet, die Signale in einer Richtung durch den Netzwerkknoten 1, 2, 3, 4, 5 führen. In Fig. 1 ist beispielsweise die Leitung 9, die Signale vom ersten Netzwerkknoten 1 zum zweiten Netzwerkknoten 2 am Eingang Rx zuführt, über die Umschalteinheit 8 des zweiten Netzwerkknotens 2 mit der Leitung 9 verbunden, die Signale von dem zweiten Netzwerkknoten 2 über den Ausgang Tx zum dritten Netzwerkknoten 3 führt. In entsprechender Weise verbindet die Umschalteinheit 8 des zweiten Netzwerkknotens 2 die Leitung 9, die Signale von dem dritten Netzwerkknoten 3 dem zweiten Netzwerkknoten 2 zuführt mit der Leitung 9, die Signale von dem zweiten Netzwerkknoten 2 zu dem ersten Netzwerkknoten 1 führt.

In einer zweiten Schaltposition unterbricht die Umschalteinheit 8 die Verbindung der Leitungen 9, die Signale in einer Richtung durch den Netzwerkknoten 1, 2, 3, 4, 5 führen und verbindet die Leitungen 9 eines Signalpfades 10 miteinander, über die Signale zwischen zwei Netzwerkknoten ausgetausch werden.

Beispielsweise verbindet die Umschalteinheit 8 des dritten Netzwerkknotens 3 die Leitung 9, die von dem zweiten Netzwerkknoten 2 Signale zum dritten Netzwerkknoten 3 führt mit der Leitung 9, die Signale von dem dritten Netzwerkknoten 3 zum zweiten Netzwerkknoten 2 führt. Gleichzeitig unterbricht die Umschalteinheit 8 des dritten Netzwerkknotens 3 die Verbindung zwischen dem dritten Netzwerkknoten 3 und den zwei Leitungen 9, die den dritten Netzwerkknoten 3 mit dem vierten Netzwerkknoten 4 verbinden. Auf diese Weise sind das erste und das zweite Netzwerk 11, 12 in bezug auf die Signalpfade 10 voneinander getrennt. Die Umschalteinheit 8 des ersten Netzwerkknotens 1 verbindet ebenfalls die zwei Leitungen 9, die vom zweiten Netzwerkknoten 2 zum ersten Netzwerkknoten 1 geführt sind.

Das zweite Netzwerk 12 umfasst den vierten und fünften Netzwerkknoten 4, 5. Die Umschalteinheiten 8 der Netzwerkknoten 4, 5 sind in der Weise geschaltet, dass die Umschalteinheiten 8 eine Verbindung der Leitungen 9 herstellt, die zwischen dem vierten und dem fünften Netzwerkknoten 4, 5 angeordnet sind. Gleichzeitig werden der vierte und der fünfte Netzwerkknoten 5 durch die entsprechende Schaltstellung der Umschalteinheiten 8 des vierten und des fünften Netzwerkknotens 4, 5 von den übrigen Leitungen 9 getrennt, die zwischen dem vierten bzw. dem fünften Netzwerkknoten 5 und weiteren Netzwerkknoten 3 ausgebildet sind.

Die Funktion der Umschalteinheit 8 wird beispielsweise durch eine Steuereinheit wenigstens teilweise oder vollständig durch ein Softwareprogramm realisiert. Auf diese Weise ist durch eine einfache Ausführung eines Softwarebefehls die Umschaltposition der Umschalteinheit 8 veränderbar. Entsprechende Befehle können beispielsweise von der Master-Steuereinheit eines Netzwerkes abgegeben werden.

Je nach Anwendungsfall ist vorzugsweise mindestens die Master-Steuereinheit an einen Datenbus angeschlossen, über den Konfigurationsbefehle von extern zur Konfiguration der Netzwerke 11, 12 zugeführt werden. Da die Schaltposition der Umschalteinheit 8 variabel einstellbar ist, kann die Konfiguration des Kommunikationssystems flexibel eingestellt werden. Dies bietet den Vorteil, dass beispielsweise Defekte in einer Leitung 9 von einem Netzwerk 11, 12 ausgeschlossen werden. Beispielsweise könnte eine der Leitungen 9, die zwischen dem dritten und dem vierten Netzwerkknoten 3, 4 ausgebildet ist, defekt sein. Dieser Defekt hat keinen Einfluss auf die Funktionsfähigkeit des ersten und des zweiten Netzwerkes 11, 12, da das erste und das zweite Netzwerk 11, 12 nicht über die zwei Leitungen 9, die zwischen dem dritten und dem vierten Netzwerkknoten 3, 4 ausgebildet sind, miteinander verbunden sind. Das erste und das zweite Netzwerk 11, 12 weisen jeweils für sich einen eigenen, ringförmig geschlossenen Signalweg auf. Im zweiten Netzwerk 12 bildet die Steuereinheit des vierten Netzwerkknotens 4 die Master-Steuereinheit und die Steuereinheit des fünften Netzwerkknotens 5 die Slave-Steuereinheit.

Ein weiterer Vorteil der flexiblen Ausbildung der unterschiedlichen Größe der Netzwerke 11, 12 besteht darin, dass die Netzwerkknoten 1 bis 5 in unterschiedlicher Aufteilung zu verschiedenen Netzwerken zusammenschaltbar sind.

In einer einfachen Ausführungsform könnten alle fünf Netzwerkknoten 1, 2, 3, 4, 5 ein einziges Netzwerk bilden. Dazu ist nur eine entsprechende Umschaltung der Umschalteinheit 8 des dritten und des vierten Netzwerkknotens 3, 4 durchzuführen. Die Anzahl der Netzwerke und der Netzwerkknoten ist nicht auf die Anzahlen des Ausführungsbeispiels beschränkt, sondern können abhängig vom Anwendungsfall gewählt werden.

Bei einer Zusammenschaltung des ersten und des zweiten Netzwerkes 11, 12 zu einem gemeinsamen Netzwerk wird die Steuereinheit des ersten Netzwerkknotens 1 oder die Steuereinheit des vierten Netzwerkknotens 4 die Master-Funktion übernehmen und die andere Steuereinheit in eine Slave-Funktion geschaltet. Abhängig vom Anwendungsfall kann es auch vorteilhaft sein, keine Master- und Slave-Steuereinheiten vorzusehen, sondern gleichberechtigte Steuereinheiten zu verwenden.

Fig. 2 zeigt eine weitere Konfiguration des Kommunikationssystems, bei dem das erste Netzwerk 11 den ersten und den zweiten Netzwerkknoten 1, 2 und das zweite Netzwerk 12 den dritten, vierten und fünften Netzwerkknoten 3, 4, 5 umfasst. Die neue Konfiguration ausgehend von der Fig. 1 wird durch eine entsprechende Umschaltung der Umschalteinheiten 8 des zweiten, dritten und vierten Netzwerkknotens 2, 3, 4 erreicht. Vorzugsweise wird die Umschaltung durch eine entsprechende Änderung durch die Software ausgeführt.

Eine Anwendung des erfindungsgemäßen Kommunikationssystems ist bei Maschinenanordnungen von Vorteil, bei denen Untereinheiten eines Gesamtsystems jeweils mehrere Steuereinheiten aufweisen, die innerhalb der Untereinheit zeitsynchron auf eine Leitachse synchronisiert werden müssen. Eine Leitachse stellt eine Zeitachse dar, nach der die Funktionen der Steuereinheiten der Untereinheit synchronisiert werden. Die Steuereinheiten einer Untereinheit können wiederum eigene, abhängige Folgeachsen, d.h. abhängige Zeitachsen aufweisen.

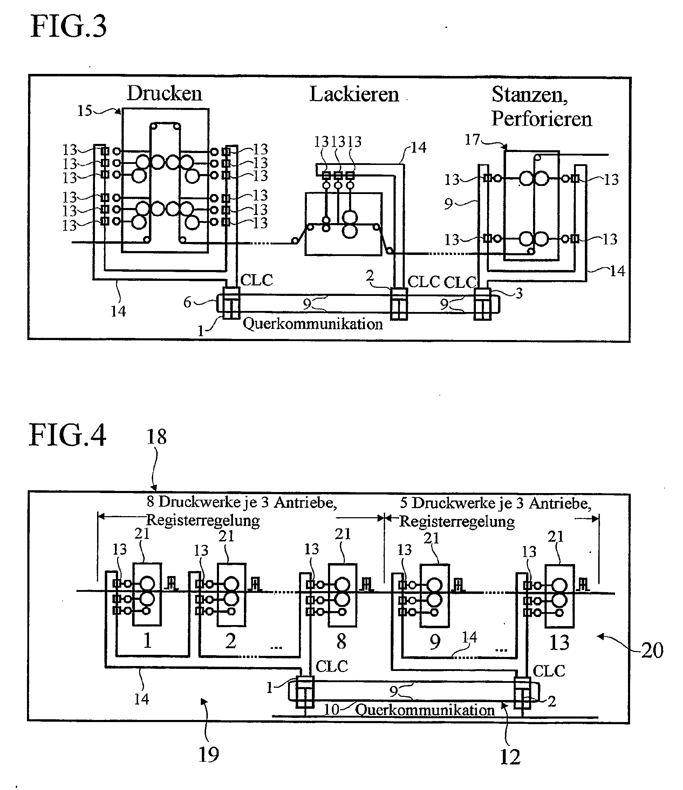

Fig. 3 zeigt eine Anwendung des erfindungsgemäßen Kommunikationssystems, bei dem ein erster, ein zweiter und ein dritter Netzwerkknoten 1, 2, 3 in Form eines ersten Netzwerkes 11 über eine erste Ringleitung 6 miteinander verbunden sind. Jeder Netzwerkknoten 1, 2, 3 steht wiederum mit einer weiteren Ringleitung 14 in Verbindung. An den weiteren Ringleitungen 14 sind elektrisch steuerbare Antriebe 13 angeschlossen.

In der dargestellten Ausführungsform der Fig. 3 übernimmt die Steuereinheit des ersten Netzwerkknotens 1 die Master-Funktionalität, die eine Leitachse für den zweiten und den dritten Netzwerkknoten 2, 3 vorgibt. Der erste, der zweite und der dritte Netzwerkknoten wird durch eine erste, zweite bzw. dritte Steuereinheit realisiert.

Die Steuereinheit des ersten Netzwerkknotens 1 übernimmt die Steuerung der Antriebe 13, die zum Steuern eines Druckwerkes 15 einer Druckmaschine vorgesehen sind. Die Steuereinheit des zweiten Netzwerkknotens 2 steuert die an den zweiten Netzwerkknoten 2 angeschlossenen Antriebe 13, die einer Lackiereinheit 16 zugeordnet sind. Die Steuereinheit des dritten Netzwerkknotens 3 steuert die Antriebe 13, die einer Stanzeinheit 17 zugeordnet sind.

Die flexible Konfiguration des erfindungsgemäßen Kommunikationssystems bietet den Vorteil, dass je nach Aufbau eines Verarbeitungskomplexes und dessen Untereinheiten unterschiedlich große Netzwerke gebildet werden können. Beispielsweise können Funktionen, die für die Funktionsweise des Verarbeitungskomplexes von geringerer Bedeutung sind, in einem eigenen Netzwerk gesteuert werden. Funktionen, die besonders kritisch für eine korrekte Funktionsweise des Verarbeitungskomplexes sind, werden ebenfalls in einem eigenen Netzwerk betreut. Zudem ergibt sich die Möglichkeit, dass beispielsweise in der Ausführungsform der Fig. 3 bei einem Ausfall der Stanzeinheit 17 der Signalpfad 10 zwischen dem zweiten und dem dritten Netzwerkknoten unterbrochen wird und trotzdem noch ein Drucken und ein Lackieren eines Bedruckstoffes möglich ist. Somit führt der Ausfall der Stanzeinheit 17 nicht zu einem kompletten Ausfall des Verarbeitungskomplexes des Kommunikationssystems. Ein Ausfall der Stanzeinheit 17 wird beispielsweise durch die Master-Steuereinheit des ersten Netzwerkknotens 1 erkannt, die eine entsprechende Überprüfung der Slave-Steuereinheiten des zweiten und des dritten Netzwerkknotens 2, 3 durchfährt.

Das erste Netzwerk 11 der Fig. 3 steht entsprechend Fig. 1 mit einem zweiten Netzwerk 12 in Verbindung, das nicht dargestellt ist.

Fig. 4 zeigt eine weitere Anwendung des erfindungsgemäßen Kommunikationssystems bei einer Druckmaschine 18. Die Druckmaschine 18 weist eine erste und eine zweite Druckeinheit 19, 20 auf. Die erste Druckeinheit 19 umfasst acht weitere Druckwerke 21, die jeweils drei Antriebe 13 aufweisen. Die Antriebe 13 der ersten Druckeinheit 19 stehen über eine weitere Ringleitung 14 mit einem ersten Netzwerkknoten 1 in Verbindung. Die zweite Druckeinheit 20 weist fünf weitere Druckwerke 21 auf, die jeweils drei Antriebe 13 aufweisen. Die Antriebe 13 der zweiten Druckeinheit 20 stehen über eine weitere Ringleitung 14 mit dem zweiten Netzwerkknoten 2 in Verbindung. Der erste und der zweite Netzwerkknoten 1, 2 sind über einen bidirektionalen Signalpfad 10 mit zwei Leitungen 9 entsprechend der Ausführungsform der Fig. 2 miteinander verbunden. Die Anordnung der Fig. 4 stellt ein zweites Netzwerk 12 entsprechend Fig. 1 dar.

Aufgrund des erfindungsgemäßen Kommunikationssystems kann mit einem einzigen Kommunikationssystem die Anordnung der Fig. 3 und die Anordnung der Fig. 4 aufgebaut werden. Dabei ist das Kommunikationssystem in ein erstes Netzwerk 11 und ein zweites Netzwerk 12 unterteilt. In diesem Ausführungsbeispiel weist das erste Netzwerk 11 die Netzwerkknoten der Fig. 3 und das zweite Netzwerk 12 die Netzwerkknoten der Fig. 4 auf. Die Netzwerke der Fig. 3 und der Fig. 4 sind entsprechend der Ausführungsform in der Fig. 1 über Leitungen 9 miteinander verbindbar, wobei jedoch die Signalpfade des ersten und des zweiten Netzwerkes 11, 12 getrennt voneinander betrieben werden.

Das erste und das zweite Netzwerk 11, 12 weisen dabei jeweils eine Master-Steuereinheit auf. Fällt beispielsweise die Master-Steuereinheit des ersten oder des zweiten Netzwerkes 11, 12 aus, und sind die anderen Steuereinheiten des Netzwerkes 11, 12 nicht in der Lage, die Master-Funktion zu übernehmen, so kann eine Zusammenschaltung des ersten und des zweiten Netzwerkes 11, 12 erfolgen. Die noch funktionierende Master-Steuereinheit übernimmt dann die Master-Funktion für das erste und das zweite Netzwerk 11, 12. Somit bietet auch in diesem Anwendungsfall die Ausbildung eines Kommunikationssystems mit mehreren Netzwerken, die flexibel konfigurierbar sind, wesentliche Vorteile.

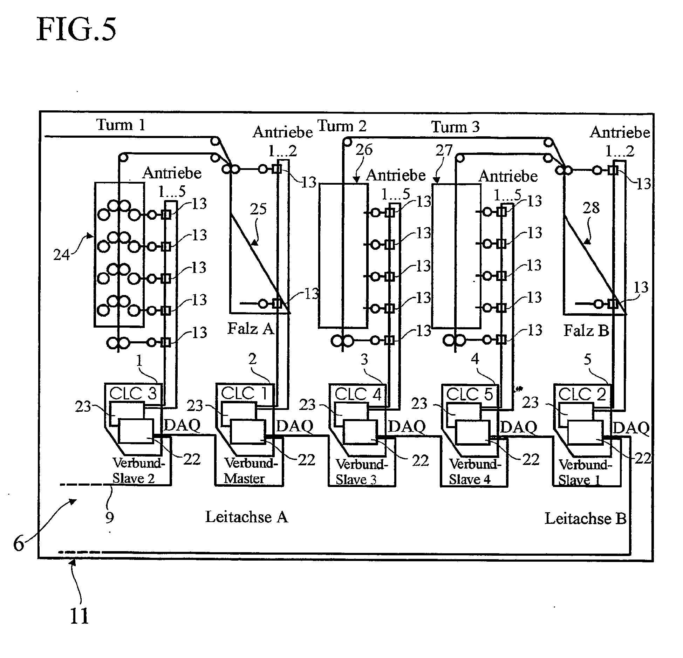

Fig. 5 zeigt eine weitere Ausführungsform des erfindungsgemäßen Kommunikationssystems. In Fig. 5 ist ein Teil einer Rotationsdruckmaschine mit zwei Falzmaschinen schematisch dargestellt. Fig. 5 zeigt einen Teil einer ersten Ringleitung 6, die mit fünf Netzwerkknoten 1, 2, 3, 4, 5 verbunden ist. Die erste Ringleitung 6 weist zwei parallele Leitungen 9 auf. Ein Netzwerkknoten 1 bis 5 weist in diesem Ausführungsbeispiel eine Schnittstelle 22 und eine Steuereinheit 23 auf. Die Schnittstelle 22 dient zum Datenaustausch zwischen der Ringleitung 6, die zwei Leitungen 9 aufweist, und der Steuereinheit 23. Die Steuereinheit 23 dient zur Steuerung von Antrieben 13. Die Steuereinheit 23 ist über eine Datenverbindung mit der Schnittstelle 22 verbunden. In dem dargestellten Ausführungsbeispiel übernimmt die Schnittstelle 22 zugleich die Funktion der Umschalteinheit 8. Die Schnittstelle 22 wird von der Steuereinheit 23 gesteuert. Die Funktionalität der Umschalteinheit 8 wird vorzugsweise über Softwareprogramme realisiert. Die Steuereinheit 23 ist mit Antrieben 13 eines ersten Druckturms 24 verbunden. Die Steuereinheit 23 des zweiten Netzwerkknotens 2 ist mit Antrieben 13 einer Falzmaschine 25 verbunden. Die Steuereinheit 23 des dritten Netzwerkknotens 3 ist mit Antrieben 13 eines zweiten Druckturms 26 verbunden.

Die Steuereinheit 23 des vierten Netzwerkknotens 4 ist mit Antrieben 13 eines dritten Druckturms 27 verbunden. Die Steuereinheit 23 des fünften Netzwerkknotens 5 ist mit Antrieben 13 einer zweiten Falzmaschine 28 verbunden. In dem gewählten Ausführungsbeispiel übernimmt die Steuereinheit 23 des zweiten Netzwerkknotens 2 die Master-Funktion für die Vorgabe einer Leitachse A. Der erste, der zweite, der vierte und der fünfte Netzwerkknoten 1, 2, 4, 5 weisen Steuereinheiten 23 auf, die Slave-Funktionen abarbeiten. Dabei folgen der erste, der zweite, der dritte und der vierte Netzwerkknoten 1, 2, 3, 4 der Leitachse A, die durch den zweiten Netzwerkknoten 2 vorgegeben wird. Der fünfte Netzwerkknoten 5 folgt einer zweiten Leitachse B, die jedoch ebenfalls durch die Steuereinheit 23 des zweiten Netzwerkknotens 2 vorgegeben wird. Die Netzwerkknoten sind entsprechend der Ausführungsform der Fig. 1 in Form eines ersten Netzwerkes 11 miteinander über die erste Ringleitung 6 verbunden.

Die Leitungen 9 sind vorzugsweise als Lichtwellenleiter ausgebildet. Die Datenübertragung über die Lichtwellenleiter erfolgt in entsprechender Weise über Lichtsignale, die von den Schnittstellen 22 in entsprechende elektrische Signale umgewandelt und an die Steuereinheiten 23 weitergegeben werden. Die Ausbildung des Datenübertragungskanals erfolgt in Form eines Feldbusses wie z.B. dem CAN-Bus.

Ein weiterer Vorteil des erfindungsgemäßen Kommunikationssystems besteht darin, dass bisher bestehende Doppelring-Topologien durch eine entsprechende Umschaltung der Rx/Tx-Ein/Ausgänge eines Netzwerkknotens in das neue erfindungsgemäße Kommunikationssystem umkonfiguriert werden können. Damit können auch bereits bestehende Doppelring-Topologien auf einfache Weise in das neue Kommunikationssystem übergeführt werden.

Die weiteren Ringleitungen 14 stellen beispielsweise einen Synax-Steuerungsverbund der Firma Indramat dar. Die Antriebe 13 weisen vorzugsweise eine elektronische Getriebefunktionalität auf, die eine wellenlose Synchronisation der Antriebe 13 ermöglicht. Jede Steuereinheit eines Netzwerkknotens berechnet vorzugsweise eine eigene Leitachse, die in Abhängigkeit von der Leitachse der Master-Steuereinheit festgelegt ist, und der die Antriebe 13 folgen, die von der Steuereinheit angesteuert werden. Die Verwendung einer Master-Steuereinheit bietet den Vorteil, dass die Master-Steuereinheit besonders ausfallsicher ausgebildet werden kann und beispielsweise sicher spannungsversorgt wird. Damit wird ein Ausfall der Master-Funktionalität vermieden. Somit wird ein Abschalten des Kommunikationssystems und damit der angesteuerten Maschine auch bei einem Defekt in einem der weiteren Steuereinheiten ohne eine Beschädigung der Maschine gewährleistet. Die erste und die zweite Ringleitung 6, 7 stellen vorzugsweise einen geschlossenen optischen Lichtwellenleiterring dar.

Aufgrund der flexiblen Einteilung der Netzwerke kann beispielsweise eine Steuereinheit, die defekt ist oder abgeschaltet werden muss, aus den übrigen Netzwerken herausgenommen werden. Damit bleiben die übrigen Netzwerke weiterhin funktionsfähig, obwohl eine Steuereinheit abgeschaltet wird. Somit beeinträchtigt das Abschalten einer Steuereinheit nicht die Funktionsfähigkeit der weiteren Steuereinheiten.

### Bezugszeichenliste

- 1: erster Netzwerkknoten
- 2: zweiter Netzwerkknoten
- 3: dritter Netzwerkknoten
- 4: vierter Netzwerkknoten
- 5: fünfter Netzwerkknoten
- 6: erste Ringleitung
- 7: zweite Ringleitung
- 8: Umschalteinheit
- 9: Leitung
- 10: Signalpfad
- 11: erstes Netzwerk
- 12: zweites Netzwerk
- 13: Antrieb
- 14: weitere Ringleitung
- 15: Druckwerk
- 16: Lackiereinheit
- 17: Stanzeinheit
- 18: Druckmaschine
- 19: erste Druckeinheit
- 20: zweite Druckeinheit
- 21: weiteres Druckwerk
- 22: Schnittstelle
- 23: Steuereinheit
- 24: erster Druckturm
- 25: Falzmaschine
- 26: zweiter Druckturm
- 27: dritte Druckturm
- 28: zweite Falzmaschine

## Patentansprüche

1. Kommunikationssystem mit Netzwerkknoten (1, 2, 3, 4, 5) eines Steuerungs- und/oder Antriebsnetzwerkes (11, 12), wobei zum Betrieb industrieller Maschinen Steuer- und/oder Regelsignale über eine geschlossene ringförmige Signalleitung (6, 7) zwischen den Netzwerkknoten ausgetauscht werden,
wobei ein Netzwerkknoten (2) Signale über einen zwei Signalwege (9) aufweisenden bidirektionalen Signalpfad (10) mit mindestens einem weiteren Netzwerkknoten (1, 3) austauscht,
wobei wenigstens ein Netzwerkknoten (2) eine Umschalteinheit (8) aufweist,
wobei die Umschalteinheit (8) über zwei bidirektionale Signalpfade (10) mit zwei weiteren Netzwerkknoten (1, 3) verbindbar ist,
wobei die Umschalteinheit (8) in einer ersten Schaltposition alle Verbindungen der Signalwege (9) der bidirektionalen Signalpfade (10) unterbricht und die Signalwege (9) der zwei Signalpfade (10) im Sinne einer bidirektionalen Durchleitung der Signale durch den Netzwerkknoten (2) verbindet,
wobei die Schalteinheit (8) in einer zweiten Schaltposition die Verbindung der Signalwege (9) zwischen den zwei Signalpfaden (10) unterbricht und zwei Signalwege (9) wenigstens eines bidirektionalen Signalpfades (10)
miteinander verbindet,
**dadurch gekennzeichnet,**
**dass** das Kommunikationssystem mittels Konfigurationsbefehles die Umschalteinheiten (8) der Netzwerkknoten (1, 2, 3, 4, 5) betätigt wodurch das Kommunikationssystem in verschiedene Netzwerke (11, 12) unterteilt wird, wobei die Netzwerke (11, 12) voneinander getrennte Signalleitungen (6, 7) aufweisen.

2. Kommunikationssystem nach Anspruch 1, **dadurch gekennzeichnet, dass** zwei Netzwerkknoten (3, 4) zweier Netzwerke (11, 12) jeweils über zwei Leitungen (9) mechanisch miteinander verbunden sind, die zwischen den zwei Netzwerkknoten (3, 4) ausgebildet sind.

3. Kommunikationssystem nach einem der Ansprüche 1 bis 2, **dadurch gekennzeichnet, dass** die Umschalteinheit (8) über eine Softwaresteuerung schaltbar ist.

4. Kommunikationssystem nach einem der Ansprüche 1 bis 3, **dadurch gekennzeichnet, dass** ein Netzwerkknoten (1, 2, 3, 4, 5) mit einer Steuereinheit (23) verbunden ist.

5. Kommunikationssystem nach Anspruch 4, **dadurch gekennzeichnet, dass** jedes Netzwerk (11, 12) eine Steuereinheit (23) mit Master-Funktion und wenigstens eine Steuereinheit (23) mit Slave-Funktion aufweist.

6. Kommunikationssystem nach einem der Ansprüche 4 bis 5, **dadurch gekennzeichnet, dass** ein Netzwerk (11, 12) entsprechend einer Leitachse und den abhängigen Folgeachsen einer Steuerung einer Maschinenanordnung konfiguriert ist, und dass alle Steuereinheiten (23), die abhängig von der Leitachse und alle Steuereinheiten (23), die abhängig von Folgeachsen der Leitachse Steueraufgaben ausführen, zu einem Netzwerk (11, 12) zusammengefasst sind.

7. Kommunikationssystem nach Anspruch 6, **dadurch gekennzeichnet, dass** die Maschinenanordnung eine Druckmaschine (18) mit mehreren Druckwerken (21) darstellt.

8. Kommunikationssystem nach Anspruch 7, **dadurch gekennzeichnet, dass** eine Steuereinheit (23) mit einer weiteren Ringleitung (14) verbunden ist,
dass die weitere Ringleitung (14) mit Antrieben (13) eines Druckwerkes (21) verbunden ist, und
dass die Steuereinheit (23) die Antriebe (13) zeitsynchron steuert.

9. Kommunikationssystem nach Anspruch 7, **dadurch gekennzeichnet, dass** Steuereinheiten (23) mehrerer Druckmaschinen (18, 20) an einem Netzwerk (11, 12) angeschlossen sind und von dem Netzwerk mit Steuersignalen versorgt werden,
dass eine Steuereinheit (23) eine Master-Funktion für die weiteren Steuereinheiten (23) ausübt, die Slave-Funktionen ausführen.

10. Verfahren zum Steuern eines Kommunikationssystems mit Netzwerkknoten (1, 2, 3, 4, 5) eines Steuerungs- und/oder Antriebsnetzwerkes (11, 12), wobei zum Betrieb industrieller Maschinen Steuer- und/oder Regelsignale über eine geschlossene ringförmige Signalleitung (6, 7) zwischen den Netzwerkknoten ausgetauscht werden,
wobei ein Netzwerkknoten (2) signale über einen zwei Signalwege (9) aufweisenden bidirektionalen Signalpfade (10) mit mindestens einem weiteren Netzwerkknoten (1, 3) austauscht,
wobei wenigstens ein Netzwerkknoten (2) eine Umschalteinheit (8) aufweist, die über zwei bidirektionale Signalpfade (10) mit zwei weiteren Netzwerkknoten (1, .3) verbindbar ist,
wobei die Umschalteinheit (8), in einer ersten Schaltposition alle Verbindungen der Signalwege (9) der bidirektionalen Signalpfade (10) unterbricht und die Signalwege (9) der zwei Signalpfade (10) im Sinne einer bidirektionale Durchleitung der Signale durch den Netzwerkknoten (2) verbindet,
wobei die Schalteinheit (8) in einer zweite Schaltposition die Verbindung der Signalwege (9) zwischen den zwei Signalpfaden (10) unterbricht und zwei Signalwege (9) wenigstens eines bidirektionalen Signalpfades (10) miteinander verbindet,
**dadurch gekennzeichnet,**
**dass** das Kommunikationssystem über eine entsprechende Schaltung der Umschalteinheiten (8) der Netzwerkknoten (1, 2, 3, 4, 5) durch als Softwarebefehle ausgestaltete Konfigurationsbefehle in verschiedene Netzwerke (11, 12), die voneinander getrennte Signalleitungen (6, 7) aufweisen, unterteilt wird.

11. Verfahren nach Anspruch 10, **dadurch gekennzeichnet, dass** bei Auftreten einer Fehlfunktion beim Datenaustausch eine Änderung der Unterteilung der Netzwerke (11, 12) durchgeführt wird, um eine defekte Signalverbindung und/oder einen defekten Netzwerkknoten (1, 2, 3, 4) oder eine Steuereinheit (23) aus einem Netzwerk (11, 12) auszuschließen.

12. Verfahren nach einem der Ansprüche 10 oder 11, **dadurch gekennzeichnet, dass** die Unterteilung des Netzwerkes (11, 12) abhängig von einer Konfiguration mehrerer Maschinen eines Verarbeitungsverbundes, insbesondere einer Druckmaschine (18), durchgeführt wird.

13. Verfahren nach Anspruch 12, **dadurch gekennzeichnet, dass** bei Auftreten einer Fehlfunktion einer Maschine des Produktionsverbundes der Netzwerkknoten (1, 2, 3, 4), der die defekte Maschine mit Steuersignalen versorgt, aus dem Netzwerk (11, 12) ausgeschlossen wird.

14. Verfahren nach einem der Ansprüche 10 bis 13, **dadurch gekennzeichnet, dass** ein Netzwerk (11, 12) eine Steuereinheit (23) mit einer Master-Funktion und mindestens eine Steuereinheit (23) mit einer Slave-Funktion aufweist, und dass bei einer Änderung der Unterteilung in einem veränderten Netzwerk (11, 12) eine andere Steuereinheit (23) die Master-Funktion übernimmt.

## Claims

1. Communication system having network nodes (1, 2, 3, 4, 5) of a control and/or drive network (11, 12), control and/or regulating signals being interchanged between the network nodes via a closed annular signal line (6, 7) in order to operate industrial machines,
a network node (2) interchanging signals with at least one further network node (1, 3) via a bidirectional signal path (10) having two signal routes (9),
at least one network node (2) having a changeover unit (8),
the changeover unit (8) being able to be connected to two further network nodes (1, 3) via two bidirectional signal paths (10),
the changeover unit (8), in a first switching position, interrupting all of the connections of the signal routes (9) of the bidirectional signal paths (10) and connecting the signal routes (9) of the two signal paths (10) in the sense of bidirectional transmission of the signals through the network node (2),
the switching unit (8), in a second switching position, interrupting the connection of the signal routes (9) between the two signal paths (10) and connecting two signal routes (9) of at least one bidirectional signal path (10) to one another,
**characterized in that**
the communication system operates the changeover units (8) of the network nodes (1, 2, 3, 4, 5) using configuration commands, as a result of which the communication system is subdivided into different networks (11, 12), the networks (11, 12) having signal lines (6, 7) which are separate from one another.

2. Communication system according to Claim 1, **characterized in that** two network nodes (3, 4) of two networks (11, 12) are respectively mechanically connected to one another via two lines (9) which are formed between the two network nodes (3, 4).

3. Communication system according to one of Claims 1 to 2, **characterized in that** the changeover unit (8) can be switched using a software controller.

4. Communication system according to one of Claims 1 to 3, **characterized in that** a network node (1, 2, 3, 4, 5) is connected to a control unit (23).

5. Communication system according to Claim 4, **characterized in that** each network (11, 12) has a control unit (23) having a master function and at least one control unit (23) having a slave function.

6. Communication system according to one of Claims 4 to 5, **characterized in that** a network (11, 12) is configured in accordance with a leading axis and the dependent following axes of a controller of a machine arrangement, and **in that** all of the control units (23) which carry out control tasks on the basis of the leading axis and all of the control units (23) which carry out control tasks on the basis of following axes of the leading axis are combined to form a network (11, 12).

7. Communication system according to Claim 6, **characterized in that** the machine arrangement is a printing machine (18) having a plurality of printing units (21).

8. Communication system according to Claim 7, **characterized**
**in that** a control unit (23) is connected to a further ring line (14),
**in that** the further ring line (14) is connected to drives (13) of a printing unit (21), and
**in that** the control unit (23) controls the drives (13) with synchronous timing.

9. Communication system according to Claim 7, **characterized**
**in that** control units (23) of a plurality of printing machines (18, 20) are connected to a network (11, 12) and are supplied with control signals by the network,
**in that** a control unit (23) performs a master function for the other control units (23) which perform slave functions.

10. Method for controlling a communication system having network nodes (1, 2, 3, 4, 5) of a control and/or drive network (11, 12), control and/or regulating signals being interchanged between the network nodes via a closed annular signal line (6, 7) in order to operate industrial machines,
a network node (2) interchanging signals with at least one further network node (1, 3) via a bidirectional signal path (10) having two signal routes (9),
at least one network node (2) having a changeover unit (8) which can be connected to two further network nodes (1, 3) via two bidirectional signal paths (10),
the changeover unit (8), in a first switching position, interrupting all of the connections of the signal routes (9) of the bidirectional signal paths (10) and connecting the signal routes (9) of the two signal paths (10) in the sense of bidirectional transmission of the signals through the network node (2),
the switching unit (8), in a second switching position, interrupting the connection of the signal routes (9) between the two signal paths (10) and connecting two signal routes (9) of at least one bidirectional signal path (10) to one another,
**characterized in that**
the communication system is subdivided into different networks (11, 12), which have signal lines (6, 7) which are separate from one another, by appropriately switching the changeover units (8) of the network nodes (1, 2, 3, 4, 5) using configuration commands which are in the form of software commands.

11. Method according to Claim 10, **characterized in that**, when a malfunction occurs during data interchange, the subdivision of the networks (11, 12) is changed in order to exclude a defective signal connection and/or a defective network node (1, 2, 3, 4) or a control unit (23) from a network (11, 12).

12. Method according to either of Claims 10 and 11, **characterized in that** the network (11, 12) is subdivided on the basis of a configuration of a plurality of machines in a processing group, in particular a printing machine (18).

13. Method according to Claim 12, **characterized in that**, when a malfunction occurs in a machine in the production group, the network node (1, 2, 3, 4) which supplies the defective machine with control signals is excluded from the network (11, 12).

14. Method according to one of Claims 10 to 13, **characterized in that** a network (11, 12) has a control unit (23) having a master function and at least one control unit (23) having a slave function, and **in that** another control unit (23) undertakes the master function when the subdivision is changed in a changed network (11, 12).

## Revendications

1. Système de communication comprenant des noeuds de réseau (1, 2, 3, 4, 5) d'un réseau de commande et/ou d'entraînement (11, 12), des signaux de commande et/ou de régulation étant échangés entre les noeuds de réseau via une ligne de signaux annulaire fermée (6, 7) afin de faire fonctionner des machines industrielles, dans lequel
- un noeud de réseau (2) échange des signaux avec au moins un autre noeud de réseau (1, 3) par un chemin de signaux bidirectionnel (10) présentant deux trajets de signaux (9),
- au moins un noeud de réseau (2) présente une unité de commutation (8) pouvant être reliée à deux autres noeuds de réseau (1, 3) par deux chemins de signaux bidirectionnels (10),
- l'unité de commutation (8), dans une première position de commutation, interrompt toutes les liaisons des trajets de signaux (9) des chemins de signaux bidirectionnels (10) et relie les trajets de signaux (9) des deux chemins de signaux (10) dans le sens d'un transit bidirectionnel des signaux à travers les noeuds de réseau (2), et
- l'unité de commutation (8), dans une deuxième position de commutation, interrompt la liaison des trajets de signaux (9) entre les deux chemins de signaux (10) et relie entre eux deux trajets de signaux (9) d'au moins un chemin de signaux bidirectionnel (10),
**caractérisé en ce que**
le système de communication actionne les unités de commutation (8) des noeuds de réseau (1, 2, 3, 4, 5) au moyen d'instructions de configuration, le système de communication étant réparti en différents réseaux (11, 12), les réseaux (11, 12) présentant des lignes de signaux (6, 7) séparées les unes des autres.

2. Système de communication selon la revendication 1,
**caractérisé en ce que**
deux noeuds de réseau (3, 4) de deux réseaux (11, 12) sont respectivement reliés mécaniquement entre eux par deux lignes (9) configurées entre les deux noeuds de réseau (3, 4).

3. Système de communication selon l'une des revendications 1 à 2,
**caractérisé en ce que**
l'unité de commutation (8) peut être commutée par une commande logicielle.

4. Système de communication selon l'une des revendications 1 à 3,
**caractérisé en ce qu'**
un noeud de réseau (1, 2, 3, 4, 5) est relié à une unité de commande (23).

5. Système de communication selon la revendication 4,
**caractérisé en ce que**
chaque réseau (11, 12) présente une unité de commande (23) avec une fonction de maître et au moins une unité de commande (23) avec une fonction d'esclave.

6. Système de communication selon l'une des revendications 4 à 5,
**caractérisé en ce qu'**
un réseau (11, 12) est configuré en fonction d'un axe directeur et des axes suivants secondaires d'une commande d'une installation industrielle, et
toutes les unités de commande (23) qui exécutent des tâches de commande en fonction de l'axe directeur et toutes les unités de commande (23) qui exécutent des tâches de commande en fonction des axes suivants l'axe directeur sont rassemblées en un réseau (11, 12).

7. Système de communication selon la revendication 6,
**caractérisé en ce que**
l'installation industrielle est une machine d'impression (18) avec plusieurs imprimantes (21).

8. Système de communication selon la revendication 7,
**caractérisé en ce qu'**
une unité de commande (23) est reliée à une autre ligne annulaire (14),
l'autre ligne annulaire (14) est reliée à des entraînements (13) d'une imprimante (21), et
l'unité de commande (23) commande les entraînements (13) de manière synchronisée dans le temps.

9. Système de communication selon la revendication 7,
**caractérisé en ce que**
des unités de commande (23) de plusieurs machines d'impression (18, 20) sont raccordées à un réseau (11, 12) et sont alimentées par le réseau en signaux de commande, et
une unité de commande (23) exerce une fonction de maître pour les autres unités de commande (23) qui exécutent des fonctions d'esclave.

10. Procédé de commande d'un système de communication comprenant des noeuds de réseau (1, 2, 3, 4, 5) d'un réseau de commande et/ou d'entraînement, des signaux de commande et/ou de régulation étant échangés entre les noeuds de réseau par une ligne de signaux annulaire fermée (6, 7) afin de faire fonctionner des machines industrielles, selon lequel
un noeud de réseau (2) échange des signaux avec au moins un autre noeud de réseau (1, 3) par un chemin de signaux bidirectionnel (10) présentant deux trajets de signaux (9),
au moins un noeud de réseau (2) présente une unité de commutation (8), qui peut être reliée à deux autres noeuds de réseau (1, 3) par deux chemins de signaux bidirectionnels (10),
l'unité de commutation (8), dans une première position de commutation, interrompt toutes les liaisons des trajets de signaux (9) des chemins de signaux bidirectionnels (10) et relie les trajets de signaux (9) des deux chemins de signaux (10) dans le sens d'un transit bidirectionnel des signaux à travers les noeuds de réseau (2), et
l'unité de commutation (8), dans une deuxième position de commutation, interrompt la liaison des trajets de signaux (9) entre les deux chemins de signaux (10) et relie entre eux deux trajets de signaux (9) d'au moins un chemin de signaux bidirectionnel (10),
**caractérisé en ce que**
le système de communication, par une commutation correspondante des unités de commutation (8) des noeuds de réseau (1, 2, 3, 4, 5) par des instructions de configuration conçues sous forme d'instructions logicielles, est réparti en différents réseaux (11, 12) qui présentent des lignes de signaux (6, 7) séparées les unes des autres.

11. Procédé selon la revendication 10,
**caractérisé en ce que**
lors de l'apparition d'un dysfonctionnement dans l'échange des données, on réalise une modification de la répartition des réseaux (11, 12) afin d'exclure une liaison de signaux défectueuse et/ou un noeud de réseau défectueux (1, 2, 3, 4) ou une unité de commande (23) d'un réseau (11, 12).

12. Procédé selon l'une des revendications 10 ou 11,
**caractérisé en ce que**
on réalise la répartition du réseau (11, 12) en fonction d'une configuration de plusieurs machines d'un module de traitement, en particulier d'une machine d'impression (18).

13. Procédé selon la revendication 12,
**caractérisé en ce que**
lors de l'apparition d'un dysfonctionnement d'une machine du module de production, le noeud de réseau (1, 2, 3, 4) qui alimente la machine défectueuse en signaux de commande est exclu du réseau (11, 12).

14. Procédé selon l'une des revendications 10 à 13,
**caractérisé en ce qu'**
un réseau (11, 12) présente une unité de commande (23) avec une fonction de maître et au moins une unité de commande (23) avec une fonction d'esclave, et
lors d'une modification de la répartition, dans un réseau modifié (11, 12), une autre unité de commande (23) prend en charge la fonction de maître.
